# DEMANDE DE BREVET EUROPEEN

(11) **EP 3 104 293 A1**
(43) Date de publication de la demande: **14.12.2016**
(21) Numéro de dépôt: 16174124.4
(22) Date de dépôt: 13.06.2016
(51) Int. Cl.: G06F 21/34, G06F 21/60, H04L 29/06

(54) **PROCÉDÉ DE GESTION DES DROITS D'ACCÈS D'UN USAGER DANS UN ENDROIT**

(30) Priorité: 12.06.2015 FR 1555383
(71) Demandeur: Parkeon, 75015 Paris (FR)
(72) Inventeur: BOHLY, Michel, 25660 MONTROND-LE-CHATEAU (FR)
(74) Mandataire: Lavoix

(57) **Abrégé**

L'invention concerne un procédé de gestion des droits d'accès d'un usager (10) dans un endroit, le procédé étant mis en oeuvre par un automate (20), entre autre par un horodateur, l'automate (20) comportant une unité de lecture (22, 26) et le procédé comportant les étapes de :
- présentation à l'organe de lecture (22, 26) d'un support physique (14) d'identification,
- envoi d'au moins un message de demande de fourniture du code d'identification par l'unité de lecture (22, 26) au support physique (14), chaque message étant un message destiné à s'adresser à la première couche (C1) selon un protocole de communication différent,
- lorsque l'unité de lecture (22, 26) reçoit une réponse du support physique (14), réception du code d'identification.

## Description

La présente invention concerne un procédé de gestion des droits d'accès d'un usager dans un endroit. L'invention se rapporte également à un automate, à un système de gestion et à un produit programme d'ordinateur associés.

De manière générale, les droits d'accès d'un usager dans un endroit sont gérés par l'utilisation d'un badge spécifique. Un tel badge est qualifié de carte spécifique mono-service.

Toutefois, cela impose de gérer de tels badges spécifiques ainsi que de gérer la logistique de distribution, le renouvellement, le remplacement faisant suite à des pertes ou à un vol. La responsabilité du gestionnaire est également impliquée pour les éventuelles sommes d'argent électroniques résiduelles en cas de défaillance du badge.

En outre, pour l'utilisateur, la multiplication du nombre de badges induit une augmentation des risques précédents, notamment la perte ou le vol.

Pour cela, il est souhaitable de limiter le nombre de badges impliqués dans la gestion des droits d'accès de l'usager dans un ou plusieurs endroits.

Il est connu des cartes privatives cumulant plusieurs fonctions. Ainsi, il existe des cartes personnalisées électriquement pour mémoriser des données applicatives que seuls les récepteurs disposant du logiciel adaptés sont capables d'adresser.

Cependant, l'utilisation de telles cartes privatives implique un développement logiciel spécifique pour l'acceptation de chaque carte.

Il est aussi connu des cartes dites « multi-applicatives ». De telles cartes présentent des régions dédiées et chaque application n'accède qu'à une région de la carte qui est réservée à l'application considérée. A titre d'exemple, il est possible de citer les cartes étudiant Moneo en France par exemple, que les étudiants peuvent utiliser pour payer leur stationnement ou accéder aux services du CROUS (restaurant universitaire ou bibliothèque notamment).

Néanmoins, l'acceptation de toutes les cartes dites « multi-applicatives » implique un développement logiciel spécifique sur le point d'acceptation, à partir de la connaissance de données applicatives de la carte.

Il existe un besoin pour un procédé de gestion des droits d'accès d'un usager dans un endroit permettant de limiter le nombre de badges impliqué et qui soit de mise en oeuvre plus aisée.

Pour cela, il est proposé un procédé de gestion des droits d'accès d'un usager dans un endroit, le procédé étant mis en oeuvre par un automate, entre autre par un horodateur, l'automate comportant une unité de lecture et le procédé comportant les étapes de présentation à l'organe de lecture d'un support physique d'identification, le support physique comportant des premières données et des deuxièmes données, les premières données correspondant à une première couche et les deuxièmes données à une deuxième couche, la première couche étant une couche de niveau plus bas que la deuxième couche, les premières données comportant un code d'identification, envoi d'au moins un message de demande de fourniture du code d'identification par l'unité de lecture au support physique, chaque message étant un message destiné à s'adresser à la première couche selon un protocole de communication différent, et lorsque l'unité de lecture reçoit une réponse du support physique, réception du code d'identification.

Suivant des modes de réalisation particuliers, le procédé comprend une ou plusieurs des caractéristiques suivantes, prise(s) isolément ou suivant toutes les combinaisons techniquement possibles :
- l'étape d'envoi est itérative, un message suivant étant envoyé selon un protocole de communication non utilisé précédemment lorsqu'aucun des messages précédemment envoyé n'a reçu de réponse de la part du support physique.
- l'étape d'envoi comporte l'utilisation d'un nombre supérieur ou égal à 5 protocoles de communication différents, de préférence supérieur ou égal à 10 protocoles de communication différents et encore de préférence supérieur ou égal à 15 protocoles de communication différents.
- chaque message comporte deux parties, la deuxième partie étant redondante avec la première partie, les deux parties demandant au support physique quel est le code d'identification.
- le procédé comporte le rejet du support physique lorsqu'aucune réponse provenant du support physique n'est reçue par l'unité de lecture.
- l'automate comporte un contrôleur et le procédé comporte, en outre, les étapes de transmission du code d'identification depuis l'unité de lecture vers un contrôleur, envoi du code d'identification par le contrôleur vers un serveur central pour récupérer des données d'accès de l'usager dans l'endroit, et envoi des données d'accès depuis le serveur central vers le contrôleur.

Il est également proposé un automate, entre autre un horodateur, comportant une unité de lecture propre à envoyer au moins un message lorsqu'un support physique d'identification est présenté à l'organe de lecture, le support physique comportant des premières données et des deuxièmes données, les premières données correspondant à une première couche et les deuxièmes données à une deuxième couche, la première couche étant une couche de niveau plus bas que la deuxième couche, les premières données comportant un code d'identification, chaque message étant un message de demande de fourniture du code d'identification au support physique, chaque message étant un message destiné à s'adresser à la première couche selon un protocole de communication différent pour le niveau de la première couche, et recevoir le code d'identification lorsque l'unité de lecture reçoit une réponse du support physique.

Il est aussi proposé un système de gestion comportant un serveur central propre à communiquer avec l'automate, et un automate tel que précédemment décrit, l'automate comportant un contrôleur propre à recevoir le code d'identification depuis l'unité de lecture et à envoyer le code d'identification par le contrôleur vers un serveur central pour récupérer des données d'accès de l'usager dans l'endroit.

Il est également proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que décrit précédemment lorsque le programme d'ordinateur est mis en oeuvre sur l'unité de traitement des données.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un système de gestion, et
- figure 2, une représentation schématique d'un autre exemple de système permettant la mise en oeuvre d'un procédé de gestion.

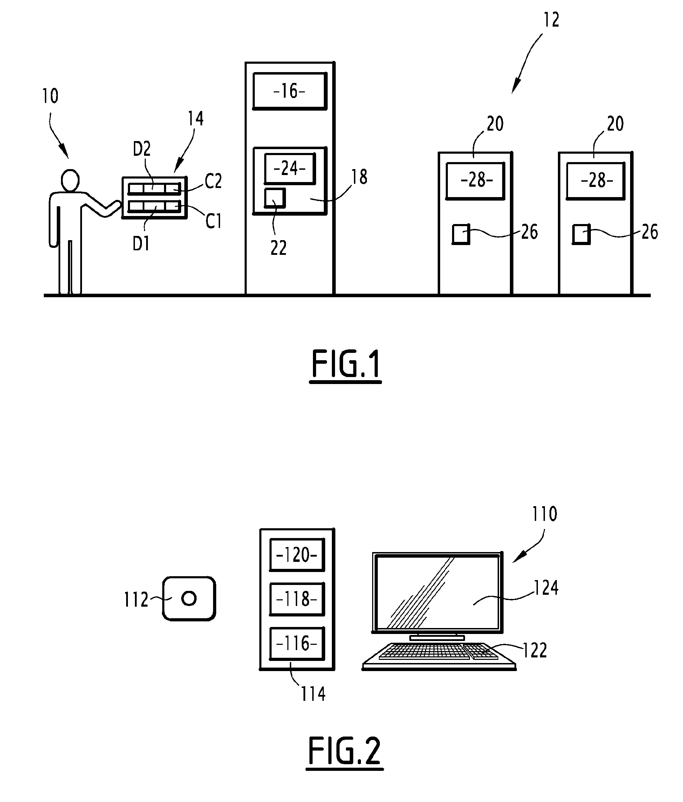

Un usager 10 et un système de gestion 12 sont représentés sur la figure 1.

L'usager 10 cherche à accéder à un endroit dont l'accès est réglementé par le système de gestion 12.

L'usager 10 dispose d'un support physique d'identification 14, simplement noté support physique 14 dans la suite.

Selon une première représentation illustrée par la figure 1, le support physique 14 comportant des premières données D1 et des deuxièmes données D2.

Les premières données D1 correspondent à une première couche C1 et les deuxièmes données D2 correspondent à une deuxième couche C2.

Les premières données D1 comportent un code d'identification CId. Le code d'identification CId est spécifique du support physique 14. Il existe une relation bijective entre les codes d'identification CId et les supports physiques 12. Ainsi, le code d'identification CId assure l'unicité du support physique 12 auquel le code d'identification CId est associé.

Selon les cas, le code d'identification CId est de différente nature.

Notamment, selon un mode de réalisation particulier, le code d'identification CId sous forme de code-barres. Un code-barres, ou code à barres, est la représentation d'une donnée numérique ou alphanumérique sous forme d'un symbole constitué de barres et d'espaces dont l'épaisseur varie en fonction de la symbologie utilisée et des données ainsi codées.

Les deuxièmes données D2 sont différentes applications permettant, par exemple, d'accéder à des données personnelles de l'usager.

La première couche C1 est une couche de niveau plus bas que la deuxième couche C2. En effet, la première couche C1 est au niveau le plus bas alors que la deuxième couche C2 est une couche applicative.

Selon une deuxième représentation, le support physique 14 comporte une mémoire, une interface de communication et un ensemble de logiciels.

La mémoire est propre à mémoriser les premières données D1.

L'interface de communication est propre à gérer les communications avec un élément extérieur. L'accès à la mémoire ou à un logiciel de l'ensemble de logiciels se fait à l'aide de l'interface de communication.

L'ensemble de logiciels correspond aux deuxièmes données D2.

Selon une troisième représentation, le support physique 14 comporte deux parties, une partie intrinsèque et une partie extrinsèque.

La partie intrinsèque fonctionne sans mettre en oeuvre de logiciels dédiés sur la base d'un protocole de communication spécifique. De ce fait, la partie intrinsèque est compatible avec toute plate-forme propre à échanger des messages dans le protocole de communication spécifique. En l'occurrence, la partie intrinsèque comporte les premières données D1.

La partie extrinsèque fonctionne en mettant en oeuvre au moins un logiciel dédié. La partie extrinsèque est propre à collaborer avec un élément extérieur pour la mise en oeuvre du logiciel. De ce fait, la mise en oeuvre du logiciel n'a lieu que si l'élément extérieur est compatible avec la mise en oeuvre du logiciel, ce qui suppose au moins qu'il soit possible d'échanger des messages dans le protocole de communication spécifique. Dans le cas général, toutefois, l'échange de messages dans le protocole de communication spécifique est une propriété insuffisante pour garantir la mise en oeuvre du logiciel.

Dans toutes les représentations précédentes, il est à noter que le support physique 14 permet soit de s'identifier ou soit de mémoriser des données personnelles.

De plus, Le support physique 14 utilise un protocole de communication bas niveau normalisé, lié à la technologie que le support physique met en oeuvre.

Selon un tel protocole de communication, le support physique 14 retourne au récepteur destiné à le détecter, une information générique comportant le code d'identification CId unique du support physique 14. Une telle information est fournie sans mettre en oeuvre une donnée applicative du support physique 14. Le protocole de communication est indépendant de toute donnée applicative.

Dans la suite, à titre d'exemple, la première représentation est privilégiée.

Une illustration de support physique 14 est un badge.

Selon un cas particulier, le support physique 14 est un badge d'accès à l'entreprise de l'usager.

En variante, le support physique 14 est une carte pour piloter les barrières d'accès aux copropriétés privées.

Selon un autre exemple, le support physique 14 est une carte pour l'enregistrement de l'emprunt de livres à la bibliothèque communale de l'usager.

Selon encore une autre illustration, le support physique 14 est un badge pour la cafétéria.

D'autres exemples sont également envisageables comme la carte de sécurité sociale ou un passeport biométrique.

Dans la suite, il est privilégié une illustration par une carte de transport. De type Calypso tel que le « pass Navigo ® » à Paris, la carte « KorriGo ®» en Bretagne, ou la carte « Oura ® » en Rhone-Alpes, la carte « Pass-Pass ® » à Lille sont des exemples de carte de vie quotidienne ou de transport.

A titre d'illustration, les cartes transport utilisées dans différentes régions du monde utilisent un protocole dit sans-contact MIFARE. MIFARE est fondée (partiellement ou complètement selon les modèles) sur l'un des standards ISO décrivant les cartes à puce sans contact : l'ISO 14443 de Type A fonctionnant à 13,56 MHz. Les pass Navigo ® à Paris reposent sur un protocole dit Calypso.

Le système de gestion 12 est propre à gérer des droits d'accès de l'usager dans un endroit.

Le système de gestion 12 comporte un serveur central 16, un organe d'inscription 18 et un ensemble d'automates 20.

A titre d'exemple, le serveur central 16 et l'organe d'inscription 18 sont disposés dans les bureaux d'accueil du public de la ville ou de l'opérateur de parking (guichets) ou peuvent être déployés sous forme de téléservice via le réseau internet.

Le serveur central 16 est usuellement un ordinateur.

Le serveur central 16 est relié à chacun des automates 20 pour communiquer des données avec les automates 20. Plus précisément, le serveur central 16 est propre à envoyer des données vers les automates 20 et à recevoir des données émises par les automates 20.

Le serveur central 16 a accès à des bases de données dans lesquelles des informations relatives à l'usager sont mémorisées. Les informations relatives à l'usager sont associées au code d'identification CId du support physique 14 généralement utilisé par l'usager.

L'organe d'inscription 18 comporte une unité de lecture centrale 22 et une interface homme/machine 24.

L'organe d'inscription 18 est propre à permettre l'inscription du support physique 14 comme un droit d'accès à l'endroit.

L'unité de lecture centrale 22 est propre à lire le code d'identification CId du support physique 14 de l'usager.

La nature de l'unité de lecture centrale 22 dépend du code d'identification CId à lire.

Par exemple, pour une carte sans contact, l'unité de lecture centrale 22 est une antenne sans contact. Pour un code d'identification sous forme de code-barres, l'unité de lecture centrale 22 est un lecteur de code-barres.

Selon un mode de réalisation avantageux, l'unité de lecture centrale 22 comporte une pluralité de sous-unités, chaque sous-unité permettant d'identifier un type particulier de code d'identification CId à lire.

A titre d'exemple, l'unité de lecture centrale 22 comporte cinq sous-unités. La première sous-unité est un lecteur de code-barres. La deuxième sous-unité est une antenne sans contact. La troisième sous-unité est une interface carte à puce à contact. La quatrième sous-unité est propre à lire des codes d'identification CId réalisant une « radio-étiquettes ». Dans un tel cas, la quatrième sous-unité est propre à réaliser une radio-identification, le plus souvent désignée par le sigle RFID (de l'anglais radio frequency identification) c'est-à-dire une méthode pour mémoriser et récupérer des données à distance en utilisant des marqueurs appelés « radio-étiquettes ». La cinquième unité est propre à mettre en oeuvre une communication en champ proche (en anglais near field communication, NFC). Une telle technologie de communication sans-fil à courte portée et haute fréquence, permet l'échange d'informations entre des périphériques jusqu'à une distance d'environ 10 centimètres (cm). Une telle technologie est une extension de la norme ISO/CEI 14443 standardisant les cartes de proximité utilisant la radio-identification (RFID), qui combinent l'interface d'une carte à puce et un lecteur au sein d'un seul périphérique.

L'interface homme/machine 24 est, selon l'exemple de la figure 1, un écran interactif. L'usager 10 a ainsi la possibilité d'entrer des informations dans le serveur central. L'interface homme/machine 24 sert également pour procéder à des paiements.

L'organe d'inscription 18 est également relié au serveur central 16 de sorte que les données obtenues soit par l'unité de lecture centrale 24 soit par l'interface homme/machine sont inscrites dans la base de données du serveur central 16.

Dans le cas particulier de la figure 1, chacun des automates 20 sont des horodateurs. Seuls deux horodateurs sont représentés sur la figure 1 par souci de simplification.

De manière connue en soi, un horodateur est un dispositif électro-mécanique permettant l'acquittement des droits de stationnement automobile. L'horodateur délivre un ticket de stationnement, indiquant l'heure et la date de l'acquittement des droits de stationnement ainsi que la durée du droit ainsi acquitté ou la date et heure de fin du droit acquitté. D'autres informations peuvent aussi figurer sur le ticket de stationnement telles que la zone, l'identification de la machine ayant délivré le titre ou un code unique permettant d'identifier les tickets contrefaits. L'automobiliste doit exposer ce justificatif bien visiblement derrière son pare-brise.

À noter qu'il existe aussi des horodateurs utilisés avec des places numérotées au sol. Ainsi, l'usager saisit le numéro de sa place, paye pour la durée souhaitée puis n'a pas à retourner à son véhicule. Dans une telle situation, l'horodateur ne délivre pas un titre de stationnement mais un reçu, optionnel.

Chaque automate 20 comprend également une unité de lecture locale 26 et un contrôleur 28.

Les mêmes remarques que précédemment pour l'unité de lecture centrale 24 s'appliquent pour chaque unité de lecture locale 26.

Le contrôleur 28 est relié d'une part à l'unité de lecture 26 et d'autre part avec le serveur central 16.

Le contrôleur 28 est notamment propre à recevoir des données provenant de l'unité de lecture 26 et à échanger des données avec le serveur central 16.

Le fonctionnement du système de gestion 12 est décrit en référence à un exemple de mise en oeuvre d'un procédé de gestion.

Dans l'exemple, il est supposé que l'usager réside dans la ville de Besançon et travaille dans la société demanderesse.

L'usager se rend dans un bureau de la ville ou du guichet de l'opérateur de parking.

Le procédé comporte une première étape de présentation à l'unité de lecture centrale 24 d'un support physique 14. En l'occurrence, l'usager 10 présente comme support physique 14 un badge d'accès demanderesse.

Le procédé comprend ensuite une deuxième étape d'envoi d'au moins d'au moins un message de demande de fourniture du code d'identification par l'unité de lecture centrale 24 au support physique 14.

Chaque message est un message destiné à s'adresser à la première couche C1 selon un protocole de communication différent.

De préférence, chaque message comporte deux parties, la deuxième partie étant redondante avec la première partie, les deux parties demandant au support physique 14 quel est le code d'identification.

Cela permet de garantir que le message n'est pas compris par le support physique 14 parce que le protocole de communication n'est pas le protocole de communication utilisé par le support physique 14.

Pour améliorer encore plus cet effet, selon un mode de réalisation particulier, chaque message comporte plus de deux parties, par exemple trois parties ou quatre parties.

Avantageusement, la deuxième étape d'envoi est itérative, un message suivant étant envoyé selon un protocole de communication non utilisé précédemment lorsqu'aucun des messages précédemment envoyé n'a reçu de réponse de la part du support physique 14.

Selon un mode de réalisation préféré, la deuxième étape d'envoi comporte l'utilisation d'un nombre supérieur ou égal à 5 protocoles de communication différents.

De préférence, la deuxième étape d'envoi comporte l'utilisation d'un nombre supérieur ou égal à 10 protocoles de communication différents.

Préférentiellement, la deuxième étape d'envoi comporte l'utilisation d'un nombre supérieur ou égal à 15 protocoles de communication différents.

A l'issue de la deuxième étape d'envoi, deux cas sont possibles.

Dans un premier cas, l'unité de lecture centrale 24 reçoit une réponse du support physique 14, le procédé comporte alors une troisième étape de réception du code d'identification CId.

Dans un deuxième cas, le procédé comporte le rejet du support physique 14 lorsqu'aucune réponse du support physique 14 n'est reçue par l'unité de lecture centrale 24.

En l'occurrence, c'est le deuxième cas qui s'applique. L'organe d'identification 16 reconnaît un support de type MIFARE et récupère le numéro unique du badge codé sur X caractères. L'organe d'identification 16 ne sait pas qu'il s'agit d'un badge de la société demanderesse. L'organe d'identification 16 n'a accès qu'à l'identifiant du support physique 14.

En outre, via l'interface homme/machine 22, l'usager 10 rentre les identifiants de son véhicule. Par exemple, le numéro de la plaque d'immatriculation est rentré via l'interface homme/machine 22.

Au guichet, une fiche résident est créée avec le code d'identification CId et les données entrées via l'interface homme/machine 22.

Lors du stationnement du véhicule de l'usager 10, les mêmes première, deuxième et troisième étapes sont itérées avec un automate 20. La seule différence dans ce cas est qu'au lieu d'utiliser l'unité de lecture centrale 24, une unité de lecture locale 26 est utilisée.

En outre, lors du stationnement du véhicule, le procédé comporte également une quatrième étape de transmission du code d'identification CId depuis l'unité de lecture locale 26 vers le contrôleur 28.

Le procédé comporte également une cinquième étape d'envoi du code d'identification CId par le contrôleur 28 vers le serveur central 16 pour récupérer des données d'accès de l'usager dans l'endroit.

Le serveur central 16 recherche alors la fiche correspondante à l'usager à partir de l'identifiant, attribue les privilèges / règles tarifaires, droits de parking associés et les renvoie à l'automate 20.

Le procédé comporte aussi une sixième étape d'envoi des données d'accès depuis le serveur central 16 vers le contrôleur 28.

En cas d'oubli ou de perte du ou des supports utilisé enregistrés dans la base de données par l'automobiliste pour s'identifier, l'usager peut saisir directement son numéro de plaque d'immatriculation sur le clavier de l'horodateur pour accéder à ses droits.

Le système de gestion 12 permet aux villes / exploitants de parking de s'affranchir de la gestion de supports spécifiques, de la création d'applications, de la logistique de distribution, de renouvellement, de remplacement suite à pertes ou vol et de la responsabilité des éventuelles sommes d'argent électroniques résiduelles en cas de défaillance du support.

Il en résulte une réduction des coûts.

En outre, cela permet de réduire les risques et responsabilité comparé aux cartes privatives qui comportent une réserve d'argent électronique disponible pour le parking. Les supports de l'identifiant sont la propriété de l'usager 10 lui-même.

De plus, le système de gestion proposé procure une flexibilité dans la mise en place de la politique de parking et de son paiement, du déploiement de nouveaux privilèges associés à un profil usager.

Le système est aussi facilité pour l'usager 10.

En effet, le système permet d'éviter la multiplication de cartes dans le portefeuille de l'usager.

De plus, il n'est plus indispensable de retenir le numéro de plaque d'immatriculation pour des schémas parking basés sur cette caractéristique (Pay By Plate) ou de disposer des papiers du véhicule sur soi.

En outre, l'usager bénéficie d'un gain de temps lors de la transaction.

L'invention repose sur le principe que tous les supports distribués aux personnes pour leur permettre de s'identifier ou pour stocker des données personnelles, présentent un identifiant qui en assure leur unicité.

De ce fait, il est possible d'étendre la présente invention à d'autres systèmes. Ainsi, ainsi qu'illustré par la figure 2, il est possible de mettre en oeuvre le procédé avec un système 110 et un produit programme d'ordinateur 112.

Le système 110 et le produit programme d'ordinateur 112 sont représentés à la figure 2. L'interaction du produit programme d'ordinateur 112 avec le système 110 permet de mettre en oeuvre un procédé d'identification d'une relation entre des éléments physiques.

Le système 110 est un ordinateur.

Plus généralement, le système 110 est un calculateur électronique propre à manipuler et/ou transformer des données représentées comme des quantités électroniques ou physiques dans des registres du système 110 et/ou des mémoires en d'autres données similaires correspondant à des données physiques dans des mémoires, des registres ou d'autres types de dispositifs d'affichage, de transmission ou de mémorisation.

Le système 110 comporte un processeur 114 comprenant une unité de traitement de données 116, des mémoires 118 et un lecteur 120 de support d'informations. Le système 110 comprend également un clavier 122 et une unité d'affichage 124.

Le produit programme d'ordinateur 112 comporte un support lisible d'informations 120.

Un support lisible d'informations 120 est un support lisible par le système 110, usuellement par l'unité de traitement de données 114. Le support lisible d'informations 120 est un médium adapté à mémoriser des instructions électroniques et capables d'être couplé à un bus d'un système informatique.

A titre d'exemple, le support lisible d'informations 120 est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 20 est mémorisé un programme d'ordinateur comprenant des instructions de programme.

Le programme d'ordinateur est chargeable sur l'unité de traitement de données 114 et est adapté pour entraîner la mise en oeuvre d'un procédé d'identification d'une relation entre des éléments physiques lorsque le programme d'ordinateur est mis en oeuvre sur l'unité de traitement des données 114.

## Revendications

1. Procédé de gestion des droits d'accès d'un usager (10) dans un endroit, le procédé étant mis en oeuvre par un automate (20), entre autre par un horodateur, l'automate (20) comportant une unité de lecture (22, 26) et le procédé comportant les étapes de :
- présentation à l'organe de lecture (22, 26) d'un support physique (14) d'identification, le support physique (14) comportant des premières données (D1) et des deuxièmes données (D2), les premières données (D1) correspondant à une première couche (C1) et les deuxièmes données (D2) à une deuxième couche (C2), la première couche (C1) étant une couche de niveau plus bas que la deuxième couche (C2), les premières données (D1) comportant un code d'identification (CId),
- envoi d'au moins un message de demande de fourniture du code d'identification (CId) par l'unité de lecture (22, 26) au support physique (14), chaque message étant un message destiné à s'adresser à la première couche (C1) selon un protocole de communication différent,
- lorsque l'unité de lecture (22, 26) reçoit une réponse du support physique (14), réception du code d'identification (CId).

2. Procédé selon la revendication 1, dans lequel l'étape d'envoi est itérative, un message suivant étant envoyé selon un protocole de communication non utilisé précédemment lorsqu'aucun des messages précédemment envoyé n'a reçu de réponse de la part du support physique (14).

3. Procédé selon la revendication 1 ou 2, dans lequel l'étape d'envoi comporte l'utilisation d'un nombre supérieur ou égal à 5 protocoles de communication différents, de préférence supérieur ou égal à 10 protocoles de communication différents et encore de préférence supérieur ou égal à 15 protocoles de communication différents.

4. Procédé selon l'une quelconque des revendications 1 à 3, dans lequel chaque message comporte deux parties, la deuxième partie étant redondante avec la première partie, les deux parties demandant au support physique (14) quel est le code d'identification (CId).

5. Procédé selon l'une quelconque des revendications 1 à 4, dans lequel le procédé comporte le rejet du support physique lorsqu'aucune réponse provenant du support physique (14) n'est reçue par l'unité de lecture (22, 26).

6. Procédé selon l'une quelconque des revendications 1 à 5, dans lequel l'automate (20) comporte un contrôleur (28) et le procédé comporte, en outre, les étapes de :
- transmission du code d'identification (CId) depuis l'unité de lecture (22, 26) vers un contrôleur (28),
- envoi du code d'identification (CId) par le contrôleur (28) vers un serveur central (16) pour récupérer des données d'accès de l'usager dans l'endroit, et
- envoi des données d'accès depuis le serveur central (16) vers le contrôleur (28).

7. Automate (20), entre autre un horodateur, comportant une unité de lecture (22, 26) propre à :
- envoyer au moins un message lorsqu'un support physique (14) d'identification est présenté à l'organe de lecture, le support physique (14) comportant des premières données (D1) et des deuxièmes données (D2), les premières données (D1) correspondant à une première couche (C1) et les deuxièmes données (D2) à une deuxième couche (C2), la première couche (C1) étant une couche de niveau plus bas que la deuxième couche (C2), les premières données (D1) comportant un code d'identification (CId), chaque message étant un message de demande de fourniture du code d'identification (CId) au support physique (14), chaque message étant un message destiné à s'adresser à la première couche (C1) selon un protocole de communication différent pour le niveau de la première couche (C1),
- recevoir le code d'identification (CId) lorsque l'unité de lecture (22, 26) reçoit une réponse du support physique (14).

8. Système de gestion (10) comportant :
- un serveur central (16) propre à communiquer avec l'automate (20), et
- un automate (20) selon la revendication 7, l'automate (20) comportant un contrôleur (28) propre à recevoir le code d'identification (CId) depuis l'unité de lecture (22, 26) et à envoyer le code d'identification (CId) par le contrôleur (28) vers un serveur central (16) pour récupérer des données d'accès de l'usager dans l'endroit.

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 6 lorsque le programme d'ordinateur est mis en oeuvre sur l'unité de traitement des données.
